# FASCICULE DE BREVET EUROPEEN

(11) **EP 0 656 487 B1**
(45) Date de publication et mention de la délivrance du brevet: **26.03.1997**
(21) Numéro de dépôt: 94402563.4
(22) Date de dépôt: 14.11.1994
(51) Int. Cl.: F16F 13/00

(54) **Perfectionnements apportés aux manchons antivibratoires hydrauliques**
Verbesserungen an hydraulisch dämpfenden Buchsen
Improvements to hydraulic damping buskings

(30) Priorité: 16.11.1993 FR 9313656
(43) Date de publication de la demande: 07.06.1995
(73) Titulaire: HUTCHINSON, F-75008 Paris (FR)
(72) Inventeur: Bouhier, Bernard, F-41140 Noyers sur Cher (FR)
(74) Mandataire: Burbaud, Eric

(56) Documents cités:
- DE-A- 3 910 570
- FR-A- 2 625 781
- US-A- 4 848 756
- US-A- 5 088 703
- PATENT ABSTRACTS OF JAPAN vol. 15 no. 457 (M-1181) ,20 Novembre 1991 & JP-A-03 194237 (NISSAN MOTOR CO LTD) 23 Août 1991,

## Description

L'invention est relative aux manchons antivibratoires hydrauliques comprenant deux armatures rigides tubulaires, respectivement intérieure et extérieure, s'entourant l'une l'autre et de préférence de révolution au moins en partie autour d'un axe Z, sensiblement coaxiales et concentriques au moins sous charge, armatures réunies entre elles par un corps en élastomère conformé de façon à former avec celles-ci au moins deux poches étanches, opposées diamétralement selon une direction dite d'oscillation X et communiquant entre elles par un canal étroit, l'ensemble desdites poches et dudit canal étant rempli d'un liquide amortisseur, et l'armature tubulaire extérieure étant serrée autour du corps en élastomère.

De tels manchons sont destinés à être montés aux fins de liaison -voire de support proprement dit- et d'amortissement entre deux pièces rigides solidarisables respectivement avec les deux armatures et susceptibles de subir l'une par rapport à l'autre des oscillations orientées selon la direction diamétrale X, l'ensemble étant agencé de façon telle que, pour certaines au moins de ces oscillations, le liquide soit refoulé alternativement de l'une des poches vers l'autre et inversement à travers le canal étroit, ce qui crée dans ce liquide, pour une fréquence donnée des oscillations dépendant des cotes dudit canal, un phénomène de résonance propre à amortir la transmission de ces oscillations de l'une des armatures à l'autre.

Les manchons du genre en question sont par exemple destinés à être interposés entre, d'une part, un châssis ou caisse de véhicule et, d'autre part, le moteur à combustion interne ou le train avant ou arrière de ce véhicule.

Le plus souvent, le canal étroit qui relie les deux poches étanches est constitué par une gorge creusée à l'extérieur du corps en élastomère, au contact de l'armature tubulaire externe.

Toutefois, ce mode de réalisation entraîne une imprécision dimensionnelle sur la section du canal étroit, du fait que l'armature tubulaire externe est fortement serrée autour du corps en élastomère, généralement par rétreint (passage dans une filière ou serrage hydraulique), ce qui peut conduire à un fluage de l'élastomère vers le canal étroit.

Cette imprécision dans la section du canal étroit est particulièrement gênante, dans la mesure où les dimensions du canal étroit déterminent la fréquence des oscillateurs pour laquelle l'amortissement est maximum.

Dans certains manchons antivibratoires de l'art antérieur, le canal étroit a été réalisé sous forme d'une gorge creusée non plus dans le corps en élastomère, mais dans une pièce rapportée. Ainsi, le document US-A-4 848 756 divulgue un manchon antivibratoire du type défini ci-dessus, dans lequel une ceinture formée en un matériau sensiblement rigide est rapportée autour du corps en élastomère, cette ceinture comportant au moins des première et deuxième parties rigides disposées respectivement en regard des deux poches, l'armature tubulaire extérieure étant serrée autour du corps en élastomère et de la ceinture, et le canal étroit étant entièrement délimité par la ceinture, de sorte que ce canal est séparé radialement de l'armature tubulaire extérieure par une paroi de ladite ceinture.

Toutefois, la mise en place de la ceinture du support antivibratoire divulgué dans ce document est délicate, dans la mesure où cette ceinture n'est solidement fixée que lors de la mise en place de l'armature tubulaire extérieure, après remplissage des poches et du canal étroit en liquide amortisseur.

La présente invention a notamment pour but, de remédier à cet inconvénient.

A cet effet, les manchons anti vibratoires du genre en question sont caractérisés en ce que les deux parties rigides de la ceinture sont fixées l'une à l'autre par clipsage lors de la mise en place de la ceinture autour du corps en élastomère.

Dans des modes préférés de réalisation de l'invention, on a recours en outre à l'une et/ou à l'autre des dispositions suivantes :
- la ceinture présente un diamètre externe légèrement inférieur au diamètre externe du corps en élastomère lorsqu'elle est fixée autour dudit corps en élastomère avant serrage de l'armature extérieure, ce qui permet de diminuer encore les contraintes de compression dans la ceinture au niveau du canal étroit ;
- le canal étroit est délimité radialement vers l'intérieur par l'une des deux parties rigides de la ceinture et radialement vers l'extérieur par l'autre partie rigide, ce qui permet une réalisation simplifiée du canal étroit, et éventuellement un remplissage en liquide amortisseur simple et fiable, par fermeture de la ceinture sur le corps en élastomère au sein d'une cuve remplie de ce liquide amortisseur, avant emmanchement de l'armature tubulaire extérieure sur le corps en élastomère et la ceinture ;
- le canal étroit est constitué par une gorge de direction circonférentielle communiquant à ses extrémités avec deux gorges axiales qui débouchent respectivement dans les deux poches étanches, ces gorges circonférentielles et axiales étant creusées dans une portion d'une des parties rigides qui est appliquée avec étanchéité contre l'autre partie rigide, cette disposition apportant une simplification de la réalisation du canal étroit ;
- le clipsage est réalisé par coopération d'un crochet élastique réalisé près d'une extrémité circonférentielle d'une des parties rigides de la ceinture, avec un évidement réalisé près d'une extrémité circonférentielle correspondante de l'autre partie rigide de la ceinture ;
- la ceinture comporte une zone de charnière sur laquelle sont articulées les deux parties rigides ;
- le corps en élastomère comporte une cloison sensiblement diamétrale qui sépare les deux poches étanches et qui présente deux rigoles en U de direction circonférentielle, sensiblement diamétralement opposées et ouvertes vers l'extérieur, les deux parties rigides étant reliées l'une à l'autre par des languettes qui sont engagées avec étanchéité dans les rigoles en U et serrées avec étanchéité à l'intérieur de l'armature externe, et le canal étroit étant formé à l'intérieur d'une de ces languettes, cette disposition permettant un positionnement précis de la ceinture sur le corps en élastomère ;
- la ceinture comporte des reliefs saillant vers l'intérieur des poches étanches pour limiter l'amplitude du mouvement relatif des armatures tubulaires selon la direction d'oscillation ;
- la ceinture présente au moins quatre ouvertures comprenant, respectivement en regard de chaque poche, au moins deux ouvertures sensiblement diamétralement opposées, ces quatre ouvertures faisant communiquer respectivement les deux poches avec l'extérieur avant le montage de l'armature tubulaire extérieure ;
- le corps en élastomère comporte une cloison sensiblement diamétrale qui sépare les deux poches étanches et qui présente des première et deuxième rigoles en U de direction circonférentielle, sensiblement diamétralement opposées et ouvertes vers l'extérieur, les deux parties rigides étant reliées l'une à l'autre par une languette de liaison sur laquelle elles sont articulées, cette languette de liaison étant engagée avec étanchéité dans la première rigole en U et serrée avec étanchéité à l'intérieur de l'armature extérieure, la première partie rigide comportant une première languette de clipsage et la deuxième partie rigide comportant une deuxième languette de clipsage, les deux languettes de clipsage étant appliquées radialement l'une contre l'autre avec étanchéité et engagées avec étanchéité dans la deuxième rigole en U, l'une des deux languettes de clipsage étant serrée avec étanchéité à l'intérieur de l'armature extérieure, au moins la deuxième languette de clipsage comportant des moyens de clipsage propres à coopérer avec des moyens de clipsage complémentaires solidaires de la première partie rigide de la ceinture pour fixer l'une à l'autre les deux parties rigides, le canal étroit étant délimité radialement vers l'intérieur par l'une des deux languettes de clipsage et radialement vers l'extérieur par l'autre des deux languettes de clipsage, ce canal étroit étant constitué par une gorge de direction circonférentielle communiquant à ses extrémités avec deux gorges axiales qui débouchent respectivement dans les deux poches étanches, ces gorges circonférentielles et axiales étant creusées sur une face d'une des deux languettes de clipsage, en regard de l'autre des deux languettes de clipsage.

D'autres avantages de l'invention apparaîtront au cours de la description détaillée suivante d'un de ses modes de réalisation, donné à titre d'exemple non limitatif, en regard des dessins joints.

Sur les dessins :
- la figure 1 est une vue en coupe d'un exemple de manchon antivibratoire selon l'invention avant montage de son armature tubulaire extérieure, la coupe étant prise selon la ligne I-I de la figure 4, l'armature extérieure du manchon étant représentée en pointillés,
- la figure 2 est une vue en coupe selon la ligne II-II de la figure 1, la ceinture étant ouverte et non coupée,
- la figure 3 est une vue de détail en élévation selon la direction III de la figure 2,
- la figure 4 est une vue en coupe selon la ligne IV-IV de la figure 1,
- la figure 5 est une vue de détail en coupe selon la ligne V-V de la figure 4, et
- la figure 6 est une vue en coupe selon la ligne VI-VI de la figure 4.

Le manchon antivibratoire selon l'invention comprend :
- une armature métallique tubulaire interne 1, de révolution autour d'un axe Z,
- une armature métallique tubulaire externe 2, elle-même de révolution, qui entoure l'armature 1 et qui, pour l'état de repos du manchon, est coaxiale à cette armature 1,
- et un corps en élastomère 3 reliant l'une à l'autre les deux armatures 1 et 2 en ménageant entre celles-ci deux poches étanches A et B diamétralement opposées selon une direction d'oscillation X, le corps en élastomère pouvant être renforcé par une cage ajoutée métallique 13.

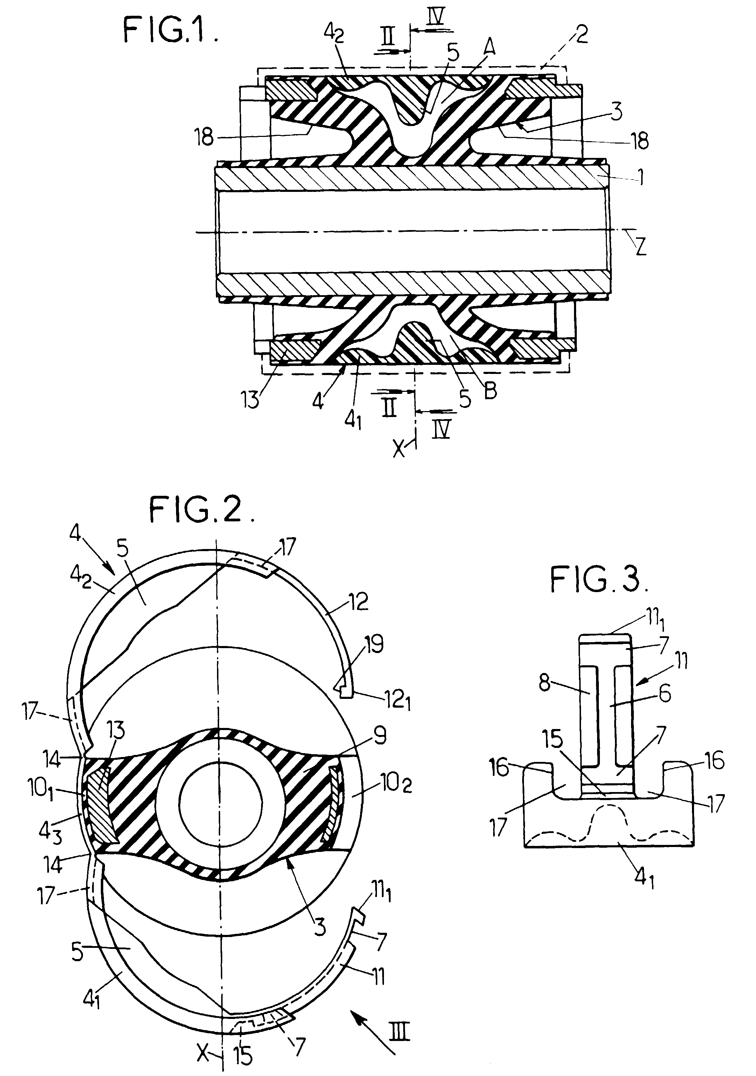

Dans l'exemple représenté sur les dessins, ce corps en élastomère comporte notamment des parois élastiques en V 18 (figure 1) ouvertes vers l'extérieur, et une cloison diamétrale 9 qui est perpendiculaire à la direction d'oscillation X (figures 2,4,6), ces parois en V et cette cloison diamétrale délimitant intérieurement les poches étanches A et B.

L'armature interne 1 est par exemple destinée à être solidarisée avec une platine (non représentée) faisant partie d'un train de suspension de véhicule.

L'armature externe 2 est alors destinée à être solidarisée avec un logement cylindrique ou palier (non représenté) faisant partie du châssis dudit véhicule.

Les deux poches A et B sont réunies entre elles par un canal étroit C et ces deux poches ainsi que ce canal sont remplies d'un liquide amortisseur.

C'est essentiellement sur la réalisation du canal C que porte la présente invention.

Ce canal étroit est ici formé dans une ceinture 4 fixée circonférentiellement autour du corps en élastomère 3 en délimitant partiellement les poches étanches A et B vers l'extérieur.

La ceinture 4 peut être réalisée par moulage en une matière plastique assez rigide, par exemple en polyamide, éventuellement renforcée par des fibres de verre.

Comme on peut le voir sur la figure 2, la ceinture 4 se compose de deux parties sensiblement rigides et sensiblement hémicylindriques, savoir une première partie 4₁ et une deuxième partie 4₂. Ces deux parties 4₁ et 4₂ présentant un même rayon extérieur et une même longueur axiale.

Elles sont reliées par une de leurs extrémités circonférentielles à une languette de liaison 4₃ commune, par l'intermédiaire d'un pont de matière 14 de faible épaisseur qui forme une charnière parallèle à l'axe Z.

La languette de liaison 4₃ s'étend parallèlement à l'axe Z sur une longueur axiale inférieure à la longueur axiale de la ceinture 4, et elle présente un rayon extérieur égal à celui de deux parties hémisphériques. Cette languette 4₃ est placée dans une position médiane par rapport à la longueur axiale de la ceinture 4.

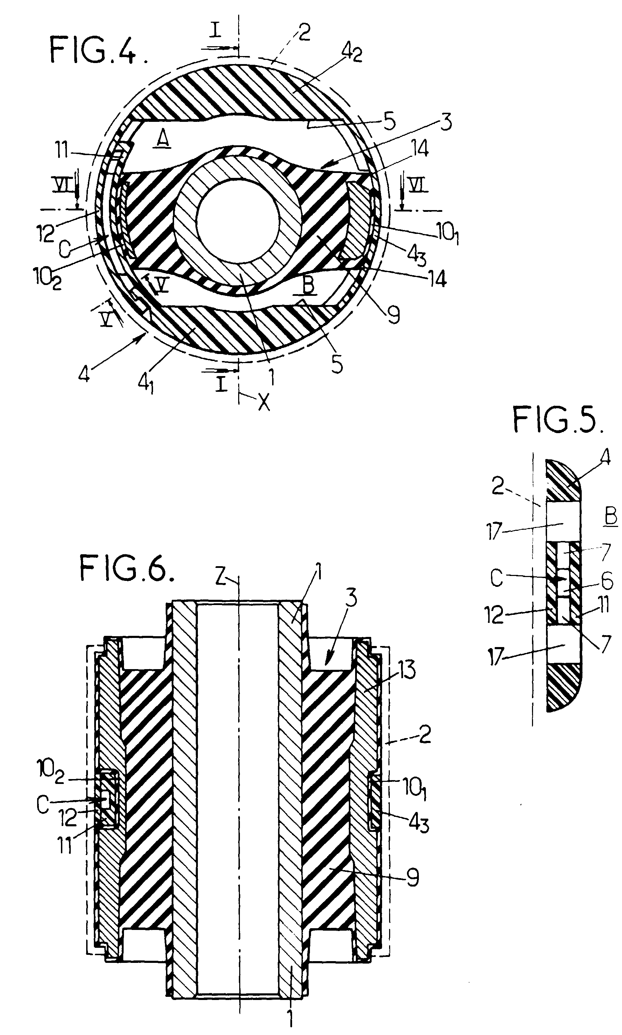

De plus, lorsque la ceinture 4 est fixée autour du corps en élastomère 3, la languette de liaison 4₃ se loge avec étanchéité dans une rigole 10₁ en forme de U qui est orientée circonférentiellement et qui est creusée dans un des bords axiaux externes de la cloison diamétrale 9 (figure 6).

Au voisinage de la languette de liaison 4₃, chaque partie hémicylindrique 4₁ et 4₂ comporte en outre une ou deux fenêtres 17, dont l'utilité sera vue plus loin.

A son extrémité circonférentielle opposée à la languette de liaison 4₃, la première partie hémicylindrique 4₁ comporte une première languette de clipsage 11, élastique, qui s'étend circonférentiellement jusqu'à une extrémité libre 11₁. Cette première languette de clipsage présente un rayon extérieur qui est inférieur au rayon extérieur des deux parties hémisphériques. Elle est placée dans une position médiane par rapport à la longueur axiale de la ceinture 4, et elle s'étend parallèlement à l'axe Z sur une longueur axiale inférieure à la longueur axiale de ladite ceinture.

La surface extérieure 8 de la première languette de clipsage présente, du côté de la première partie hémicylindrique 4₁, une rainure de clipsage 15 externe qui s'étend axialement. Cette surface extérieure 8 présente aussi (figure 3) une gorge 6 qui s'étend circonférentiellement entre deux extrémités où ladite gorge 6 communique respectivement avec deux gorges axiales 7 formées sur toute la largueur de la première languette de clipsage 11.

L'extrémité circonférentielle de la première partie hémicylindrique 4₁ qui est proche de la première languette de clipsage 11 comporte deux échancrures 16, disposées respectivement de chaque côté de la languette 11 et délimitant avec celle-ci deux fenêtres 17.

Revenant à la figure 2, la deuxième partie hémicylindrique 4₂ présente, à son extrémité circonférentielle opposée à la languette de liaison 4₃, une deuxième languette de clipsage 12, qui est disposée en regard de la première languette de clipsage 11 et qui s'étend circonférentiellement jusqu'à une extrémité libre 12₁ dotée d'une nervure de clipsage 19 axiale dirigée vers l'intérieur. Cette deuxième languette de clipsage présente un rayon intérieur égal au rayon extérieur de la première languette de clipsage 11, et un rayon extérieur égal à celui des deux parties hémicylindriques 4₁ et 4₂.

De plus, la longueur de la deuxième languette de clipsage est telle que la nervure de clipsage 19 peut venir se clipser dans la rainure de clipsage 15 lorsqu'on ferme la ceinture 4 autour du corps en élastomère 3, en rapprochant l'une de l'autre les deux parties hémicylindriques 4₁ et 4₂.

Lorsque la ceinture est ainsi fermée, comme représenté sur la figure 4, la languette 12 est appliquée avec étanchéité contre la languette 11, de sorte que le canal étroit C, constitué par les gorges 6 et 7, est complètement délimité par lesdites languettes 11 et 12 et communique avec les poches A et B par l'intermédiaire des fenêtres 17 (figure 5).

En position fermée, la ceinture 4 présente un contour circulaire de diamètre sensiblement égal au diamètre extérieur du corps en élastomère 3, et les languette 11 et 12 sont engagées avec étanchéité dans une rigole 10₂ en U qui est orientée circonférentiellement et qui est creusée à l'extérieur de la cloison 9, à l'opposé de la rigole 10₁ déjà mentionnée.

En outre, chaque partie hémicylindrique 4₁, 4₂ de la ceinture présente intérieurement des reliefs 5 qui après fermeture de la ceinture, sont diamétralement opposés selon la direction d'oscillation X, et qui limitent l'amplitude du mouvement relatif entre les armatures tubulaires 1 et 2 selon l'axe X.

Après fixation de la ceinture 4 autour du corps en élastomère 3, l'ensemble est plongé dans un liquide amortisseur. Ce liquide pénètre à l'intérieur de la ceinture 4 grâce aux fenêtres 17, et remplit les poches A, B et le canal étroit C.

L'armature tubulaire extérieure 2 est ensuite emboîtée de façon étanche sur le corps en élastomère 3 et la ceinture 4, au sein du liquide, puis l'ensemble est sorti du liquide et enfin l'armature tubulaire extérieure est serrée par rétreint sur le corps en élastomère et la ceinture.

De préférence, le diamètre extérieur de la ceinture 4 est légèrement inférieur à celui du corps en élastomère 3 avant serrage, pour diminuer les contraintes imposées à la ceinture 4 par le serrage de l'armature tubulaire extérieure 2, la ceinture 4 restant toutefois en contact étanche contre l'armature 2 après serrage.

De plus, grâce à la disposition adoptée, l'étanchéité du canal étroit entre ses deux extrémités est parfaitement assurée même si le serrage de l'armature tubulaire extérieure 2 induit une certaine déformation de la ceinture 4.

Eventuellement, la ceinture 4 peut être clipsée lorsqu'elle se trouve déjà au sein du liquide, ce qui garantit un remplissage parfait et immédiat des poches A, B et du canal étroit C. Dans ce cas, les fenêtres 17 de la ceinture pourraient être supprimées, la ceinture 4 délimitant alors totalement les poches A et B, et le canal étroit C communiquant avec les poches A et B par des perçages radiaux ou par tout autre moyen.

Selon une autre variante possible, les deux parties hémicylindriques 4₁ et 4₂ pourraient être disjointes et assemblées par clipsage à leurs deux extrémités circonférentielles. Dans ce cas, le clipsage peut être réalisé par deux languettes similaires aux languettes 11 , 12 décrites ci-dessus, à chaque extrémité circonférentielle, avec un canal étroit C défini entre ces deux languettes. Ainsi le manchon antivibratoire pourrait comporter deux canaux étroits C, éventuellement avec des caractéristiques dimensionnelles différentes pour donner un amortissement maximum à deux fréquences d'oscillation différentes.

## Revendications

1. Manchon antivibratoire hydraulique comprenant deux armatures rigides tubulaires (1,2) respectivement intérieure et extérieure, s'entourant l'une l'autre et réunies entre elles par un corps en élastomère (3) conformé de façon à former avec celles-ci au moins deux poches étanches (A,B), opposées diamétralement selon une direction dite d'oscillation (X) et communiquant entre elles par un canal étroit (C), l'ensemble desdites poches et dudit canal étant rempli d'un liquide amortisseur, le manchon comprenant en outre une ceinture (4) rapportée autour du corps en élastomère (3), cette ceinture (4) étant formée en un matériau sensiblement rigide et comportant au moins des première et deuxième parties rigides (4₁, 4₂) disposées respectivement en regard des deux poches (A, B), l'armature tubulaire extérieure (2) étant serrée autour du corps en élastomère (3) et de la ceinture (4), le canal étroit (C) étant entièrement délimité par la ceinture (4), de sorte que ce canal (C) est séparé radialement de l'armature tubulaire extérieure (2) par une paroi de ladite ceinture (4), caractérisé en ce que les deux parties rigides (4₁, 4₂) de la ceinture (4) sont fixées l'une à l'autre par clipsage lors de la mise en place de la ceinture (4) autour du corps (3) en élastomère.

2. Manchon antivibratoire selon la revendication 1, dans lequel la ceinture (4) présente un diamètre externe légèrement inférieur au diamètre externe du corps en élastomère (3) lorsqu'elle est fixée autour dudit corps en élastomère, avant serrage de l'armature extérieure (2).

3. Manchon antivibratoire selon l'une quelconque des revendications 1 et 2, dans lequel le canal étroit (C) est délimité radialement vers l'intérieur par l'une (4₁) des deux parties rigides de la ceinture et radialement vers l'extérieur par l'autre partie rigide (4₂).

4. Manchon antivibratoire selon la revendication 3, dans lequel le canal étroit (C) est constitué par une gorge de direction circonférentielle (6) communiquant à ses extrémités avec deux gorges axiales (7) qui débouchent respectivement dans les deux poches étanches (A, B), ces gorges circonférentielles et axiales étant creusées dans une portion (8) d'une (4₁) des parties rigides qui est appliquée avec étanchéité contre l'autre partie rigide (4₂).

5. Manchon antivibratoire selon l'une quelconque des revendications précédentes, dans lequel le clipsage est réalisé par coopération d'un crochet élastique (19) réalisé près d'une extrémité circonférentielle d'une des parties rigides (4₂) de la ceinture, avec un évidement (15) réalisé près d'une extrémité circonférentielle correspondante de l'autre partie rigide (4₁) de la ceinture.

6. Manchon antivibratoire selon l'une quelconque des revendications précédentes, dans lequel la ceinture comporte une zone de charnière (4₃) sur laquelle sont articulées les deux parties rigides (4₁, 4₂) de ladite ceinture.

7. Manchon antivibratoire, selon l'une quelconque des revendications précédentes, dans lequel le corps en élastomère (3) comporte une cloison sensiblement diamétrale (9) qui sépare les deux poches étanches (A, B) et qui présente deux rigoles en U (10₁, 10₂) de direction circonférentielle, sensiblement diamétralement opposées et ouvertes vers l'extérieur, les deux parties rigides (4₁, 4₂) étant reliées l'une à l'autre par des languettes (4₃, 11, 12) qui sont engagées avec étanchéité dans les rigoles en U et serrées avec étanchéité à l'intérieur de l'armature extérieure (2), et le canal étroit (C) étant formé à l'intérieur d'une de ces languettes.

8. Manchon antivibratoire selon l'une quelconque des revendications précédentes, dans lequel la ceinture (4) comporte des reliefs (5) saillant vers l'intérieur des poches étanches (A,B) pour limiter l'amplitude du mouvement relatif des armatures tubulaires (1,2) selon la direction d'oscillation (X).

9. Manchon antivibratoire selon l'une quelconque des revendications précédentes, dans lequel la ceinture (4) présente au moins quatre ouvertures (17) comprenant, respectivement en regard de chaque poche (A, B), au moins deux ouvertures (17) sensiblement diamétralement opposées, ces quatre ouvertures faisant communiquer respectivement les deux poches (A, B) avec l'extérieur avant le montage de l'armature tubulaire extérieure (2).

10. Manchon antivibratoire selon la revendication 4, dans lequel le corps en élastomère (3) comporte une cloison (9) sensiblement diamétrale qui sépare les deux poches étanches (A, B) et qui présente des première et deuxième rigoles en U (10₁, 10₂) de direction circonférentielle, sensiblement diamétralement opposées et ouvertes vers l'extérieur, les deux parties rigides (4₁, 4₂) étant reliées l'une à l'autre par une languette de liaison (4₃) sur laquelle elles sont articulées, cette languette de liaison étant engagée avec étanchéité dans la première rigole en U (10₁) et serrée avec étanchéité à l'intérieur de l'armature extérieure (2), la première partie rigide (4₁) comportant une première languette de clipsage (11) et la deuxième partie rigide (4₂) comportant une deuxième languette de clipsage (12), les deux languettes de clipsage (11, 12) étant appliquées radialement l'une contre l'autre avec étanchéité et engagées avec étanchéité dans la deuxième rigole en U (10₂), une (12) des deux languettes de clipsage étant serrée avec étanchéité à l'intérieur de l'armature extérieure (2), au moins la deuxième languette de clipsage (12) comportant des moyens de clipsage (19) propres à coopérer avec des moyens de clipsage complémentaires (15) solidaires de la première partie rigide (4₁) de la ceinture pour fixer l'une à l'autre les deux parties rigides (4₁, 4₂), le canal étroit (C) étant délimité radialement vers l'intérieur par l'une (11) des deux languettes de clipsage et radialement vers l'extérieur par l'autre (12) des deux languettes de clipsage, ce canal étroit (C) étant constitué par une gorge de direction circonférentielle (6) communiquant à ses extrémités avec deux gorges axiales (7) qui débouchent respectivement dans les deux poches étanches (A, B), ces gorges circonférentielles et axiales étant creusées sur une face (8) d'une (11) des deux languettes de clipsage, en regard de l'autre (12) des deux languettes de clipsage.

## Patentansprüche

1. Dämpfende hydraulische Buchse mit zwei festen ringförmigen inneren bzw. äußeren Umhüllungen (1,2), welche sich umgeben und zwischen sich durch einen elastomeren Körper (3) verbunden sind, der derart angepaßt ist, um mit diesen wenigstens zwei dichte Taschen (A,B) zu bilden, welche diametral gegenüberliegend entlang einer Oszillationsrichtung (X) liegen und untereinander durch einen engen Kanal (C) kommunizieren, wobei die Gesamtheit dieser Taschen und des Kanals mit einer dämpfenden Flüssigkeit gefüllt ist, wobei die Buchse außerdem einen Gürtel (4) aufweist, welcher um den elastomeren Körper (3) gefügt ist, wobei dieser Gürtel (4) aus einem im wesentlichen festen Material gebildet ist und wenigstens erste und zweite feste Bereiche (4₁,4₂) aufweist, die jeweils gegenüberliegend zu den beiden Taschen (A,B) angeordnet sind, wobei die äußere ringförmige Umhüllung (2) um den elastomeren KÖrper (3) und den Gürtel (4) herum gepreßt ist, wobei der enge Kanal (C) vollständig von dem Gürtel (4) begrenzt ist, derart, daß der Kanal (C) radial von der äußeren ringförmigen Umhüllung (2) durch eine Wand des Gürtels (4) getrennt ist,
dadurch gekennzeichnet,
daß die beiden festen Bereiche (4₁,4₂) des Gürtels (4) während der Befestigung des Gürtels (4) um den elastomeren Körper (3) aneinander durch einen Clipsverschluß befestigt sind.

2. Dämpfende Buchse nach Anspruch 1, bei welcher der Gürtel (4) einen äußeren Durchmesser aufweist, der geringfügig kleiner als der äußere Durchmesser des elastomeren Körpers (3) ist, während er um diesen elastomeren Körper vor der Befestigung der äußeren Umhüllung (2) befestigt wird.

3. Dämpfende Buchse nach irgendeinem der Ansprüche 1 und 2, bei welchem der enge Kanal (C) radial nach innen durch die eine (4₁) der beiden festen Wände des Gürtels und radial nach außen durch die andere feste Wand (4₂) begrenzt ist.

4. Dämpfende Buchse nach Anspruch 3, bei welcher der enge Kanal (C) von einer Nut (6) mit umfänglicher Ausrichtung gebildet ist, die an ihren Enden mit zwei axialen Nuten (7) kommuniziert, die jeweils in die beiden dichten Taschen (A,B) einmünden, wobei die umfänglichen und axialen Nuten sich in einem Bereich (8) der einen (4₁) der festen Bereiche kreuzen, der dichtend gegen den anderen festen Bereich (4₂) angewendet wird.

5. Dämpfende Buchse nach irgendeinem der vorangehenden Ansprüche, bei welchem der Clipsverschluß durch das Zusammenwirken eines elastischen Hakens (19), der nahe an einem umfänglichen Ende eines der festen Bereiche (4₂) des Gürtels verwirklicht ist, mit einer Ausnehmung (15) verwirklicht wird, die nahe eines umfänglichen entsprechenden Endes des anderen festen Bereiches (4₁) des Gürtels verwirklicht ist.

6. Dämpfende Buchse nach irgendeinem der vorangehenden Ansprüche, bei welchem der Gürtel eine Scharnierzone (4₃) aufweist, an welcher die beiden festen Bereiche (4₁,4₂) des Gürtels angelenkt sind.

7. Dämpfende Buchse nach irgendeinem der vorangehenden Ansprüche, bei welcher der elastische Körper (3) eine im wesentlichen diametrale Trennwand (9) aufweist, welche die beiden dichten Taschen (A,B) trennt und welche zwei U-förmige Rinnen (10₁,10₂) mit umfänglicher Ausrichtung aufweist, im wesentlichen diametral gegenüberliegend und offen nach außen, wobei die beiden festen Bereiche (4₁,4₂) gegenseitig durch Zungen (4₃,11,12) miteinander verbunden sind, die dicht in die U-förmigen Rinnen eingreifen und dicht auf das Innere der äußeren Umhüllung (2) drücken, wobei der enge Kanal (C) im Inneren einer dieser Zungen gebildet ist.

8. Dämpfende Buchse nach irgendeinem der vorangehenden Ansprüche, bei welchem der Gürtel (4) Reliefs (5) aufweist, die gegen das Innere der dichten Taschen (A,B) vorspringen, um die Amplitude der Relativbewegung der rohrförmigen Umhüllungen (1,2) entlang der Oszillationsrichtung (X) zu begrenzen.

9. Dämpfende Buchse nach irgendeinem der vorangehenden Ansprüche, bei welcher der Gürtel (4) wenigstens vier Öffnungen (17) aufweist, von dem jeweils gegenüberliegend zu jeder Tasche (A,B) wenigstens zwei Öffnungen im wesentlichen diametral gegenüberliegen, wobei die vier Öffnungen jeweils die beiden Taschen (A,B) mit dem Äußeren vor der Montage der äußeren ringförmigen Umhüllung (2) kommunzieren lassen.

10. Dämpfende Buchse nach Anspruch 4, bei welcher der elastomere Körper (3) eine im wesentlichen diametrale Trennwand (9) aufweist, die die beiden dichten Taschen (A,B) trennt und erste und zweite U-förmige Rinnen (10₁,10₂) mit umfänglicher Ausrichtung aufweist, im wesentlichen diametral gegenüberliegend und nach außen geöffnet, wobei die beiden festen Teile (4₁,4₂) miteinander über eine Verbindungszunge (4₃) verbunden sind, an welcher sie angelenkt sind, wobei diese Verbindungszunge dicht in die erste U-förmige Rinne (10₁) eingreift und dicht in das Innere der äußeren Umhüllung (2) drückt, wobei der erste feste Teil (4₁) eine erste Clipszunge (11) und der zweite feste Bereich (4₂) eine zweite Clipszunge (12) aufweist, wobei die beiden Clipszungen (11,12) radial gegeneinander mit Dichtheit angewendet werden und mit Dichtheit in die zweite U-förmige Rinne (10₂) eingreifen, wobei eine (12) der beiden Clipszungen dicht in das Innere der äußeren Umhüllung (2) drückt, wobei wenigstens die zweite Clipszunge (12) Clipsmittel (19) aufweist, die geeignet sind, mit komplementären Clipsmitteln (15) zusammenzuwirken, die fest an dem ersten festen Teil (4₁) des Gürtels sind, um die beiden festen Bereiche (4₁,4₂) gegeneinander zu fixieren, wobei der enge Kanal (C) radial in das Innere durch eine (11) der beiden Clipszungen und radial gegen das Äußere durch die andere (12) der beiden Clipszungen begrenzt wird, wobei der enge Kanal (C) von einer Nut (6) mit umfänglicher Ausrichtung gebildet wird, die an ihren Enden mit zwei axialen Nuten (7) kommuniziert, welche jeweils in die beiden dichten Taschen (A,B) münden, wobei die umfänglichen und die axialen Nuten sich auf einer Fläche (8) der einen (11) der beiden Clipszungen gegenüberliegend zur anderen (12) der beiden Clipszungen kreuzen.

## Claims

1. A hydraulic anti-vibration sleeve comprising a rigid tubular inner frame (1) and outer frame (2), the frames surrounding one another and being connected by an elastomer body (3) shaped so as to co-operate with the frames to form at least two sealing-tight pockets (A, B), diametrically opposite one another in an "oscillation" direction (X) and communicating with one another via a narrow duct (C), the assembly made up of the pockets and duct being filled with a shockabsorbing liquid, the sleeve also comprising a belt (4) fitted around the elastomer body (3), the belt (4) being made from a substantially rigid material and comprising at least first and second rigid parts (4₁, 4₂) disposed facing the two pockets (A, B) respectively, the outer tubular frame (2) being clamped around the elastomer body (3) and the belt (4), and the narrow duct (C) being entirely bounded by the belt (4) so that the duct (C) is radially separated from the tubular outer frame (2) by a wall of the belt (4),
characterised in that the two rigid parts (4₁, 4₂) of the belt (4) are secured to one another by snap-fitting when the belt (4) is positioned around the elastomer body (3).

2. An anti-vibration sleeve according to claim 1,
wherein the belt (4) has an outer diameter slightly less than the outer diameter of the elastomer body (3) when the belt is secured around the elastomer body and before the outer frame (2) is clamped.

3. An anti-vibration sleeve according to claim 1 or 2, wherein the narrow duct (C) is radially bounded towards the interior by one (4₁) of the two rigid parts of the belt and radially bounded towards the exterior by the other rigid part (4₂).

4. An anti-vibration sleeve according to claim 3, wherein the narrow duct (C) comprises a groove in the circumferential direction (6) communicating at its ends with two axial grooves (7) which open respectively into the two sealing-tight pockets (A, B), the circumferential and axial grooves being formed in a portion (8) of one (4₁) of the rigid parts, which is pressed in sealing-tight manner against the other rigid part (4₂).

5. An anti-vibration sleeve according to any of the preceding claims, wherein snap-fitting is effected by a resilient hook (19) near a circumferential end of one of the rigid parts (4₂) of the belt, co-operating with a recess (15) near a corresponding circumferential end of the other rigid part (4₁) of the belt.

6. An anti-vibration sleeve according to any of the preceding claims, wherein the belt has a hinge zone (4₃) on to which the two rigid parts (4₁, 4₂) of the belt are articulated.

7. An anti-vibration sleeve according to any of the preceding claims, wherein the elastomer body (3) has a substantially diametral partition (9) which separates the two sealing-tight pockets (A, B) and has two U-shaped channels (10₁, 10₂) in the circumferential direction, substantially diametrically opposite and open towards the exterior, the two rigid parts (4₁, 4₂) being interconnected by tongues (4₃, 11, 12) which fit in sealing-tight manner into the U-shaped channels and are clamped in sealing-tight manner inside the outer frame (2), the narrow duct (C) being formed inside one of the tongues.

8. An anti-vibration sleeve according to any of the preceding claims, wherein the belt (4) has raised portions (5) which project towards the interior of the sealing-tight pockets (A, B) in order to limit the amplitude of relative motion of the tubular frames (1, 2) in the direction of oscillation (X).

9. An anti-vibration sleeve according to any of the preceding claims, wherein the belt (4) has at least four openings (17) comprising at least two substantially diametrically opposite openings (17) facing each respective pocket (A, B), the four openings respectively connecting the two pockets (A, B) to the exterior before the outer tubular frame (2) is fitted.

10. An anti-vibration sleeve according to claim 4, wherein the elastomer body (3) has a substantially diametral partition (9) which separates the two sealing-tight pockets (A, B) and has first and second U-shaped channels (10₁, 10₂) in the circumferential direction, substantially diametrically opposite and open towards the exterior, the two rigid parts (4₁, 4₂) being interconnected by a connecting tongue (4₃) to which they are articulated, the connecting tongue fitting in sealing-tight manner into the first U-shaped channel (10₁) and being clamped in sealing-tight manner inside the outer frame (2), the first rigid part (4₁) comprising a first snap-fitting tongue (11) and the second rigid part (4₂) comprising a second snap-fitting tongue (12), the two snap-fitting tongues (11, 12) being radially pressed against one another in sealing-tight manner and fitted in sealing-tight manner into the second U-shaped channel (10₂), one (12) of the two snap-fitting tongues being clamped in sealing-tight manner inside the outer frame (2), at least the second snap-fitting tongue (12) comprising snap-fitting means (19) adapted to co-operate with complementary snap-fitting means (15) secured to the first rigid part (4₁) of the belt in order to secure the two rigid parts (4₁, 4₂) together, the narrow duct (C) being radially bounded towards the interior by one (11) of the two snap-fitting tongues and radially bounded towards the exterior by the other (12) of the two snap-fitting tongues, the narrow duct (C) comprising a groove in the circumferential direction (6) communicating at its ends with two axial grooves (7) which open respectively into the two sealing-tight pockets (A, B), the circumferential and axial grooves being formed on one surface (8) of one (11) of the two snap-fitting tongues, facing the other snap-fitting tongue (12).
